# EUROPEAN PATENT SPECIFICATION

(11) **EP 1 653 825 B1**
(45) Date of publication and mention of the grant of the patent: **02.09.2009**
(21) Application number: 04743647.2
(22) Date of filing: 03.08.2004
(51) Int. Cl.: A45C 11/04

(54) **CASE FOR SPECTACLES**
BRILLENBEHÄLTER
ETUI A LUNETTES

(30) Priority: 14.08.2003 GB 0319038
(43) Date of publication of application: 10.05.2006
(73) Proprietor: Lewis, Gene Lee Cheyenne, Watford, Hertfordshire WD19 6HQ (GB)
(72) Inventor: Lewis, Gene Lee Cheyenne, Watford, Hertfordshire WD19 6HQ (GB)
(74) Representative: Messulam, Alec Moses
(86) International application number: PCT/GB2004/003344
(87) International publication number: WO 2005/016057

(56) References cited:
- WO-A-03/056970
- GB-A- 757 788
- US-A- 5 455 637
- US-A1- 2002 159 023

## Description

### Field of the invention

This invention relates to a case for receiving a pair of spectacles formed integrally with at least an earpiece, a microphone, a rechargeable power source and a radio communication circuit.

### Background of the invention

The popularity of cellular phones has led to several concerns regarding the safety of their use. Aside from the possible danger that exposure to electromagnetic radiation during prolonged use of a cellular phone may cause cancer, there is also a risk of road accidents if such phones are used while driving. A driver using one hand to hold a mobile phone to his ear compromises his ability to drive safely and legislation is therefore being passed in many countries to make the use of hand held phones illegal while driving.

For these and other reasons, it has already been proposed to provide cellular phones with hands free kits. These consist of an earpiece placed within or next to the ear and a mouthpiece that hangs down on a wire to lie on the chest of the user. The wire may then connect into the phone unit. This has the advantage that no hands need be used to support the phone, leaving the driver unencumbered to control the vehicle. It also results in the phone being located away from the user's head. Since electromagnetic radiation intensity follows an inverse square law, remotely locating the phone will reduce the exposure of the user to electromagnetic radiation emitted by the phone.

Though this still leaves a problem that functions need to be controlled, the use of voice recognition instead of a keypad allows the answering and making of calls to be performed without viewing a screen or touching a keypad, thereby making operation easier and safer when driving.

The advent of recent improved technology, namely Bluetooth^{®}, has enabled a wireless connection between the phone and the hands free kit. The resulting hands free apparatus takes the form of an earpiece with workings which rest on the ear, having a boom which extends towards the mouth, for supporting a microphone.

While functionally adequate, such wireless hands free kits are somewhat bulky, and unattractive as well as being uncomfortable when used over long periods, due to their weight being supported entirely on one ear.

A proposed solution has been to incorporate such a hands free kit into a pair of spectacles such as in US5455637, thereby enabling the phone to be used comfortably while leaving the user with his hands free. This solution lacked a useful charging facility. The issue of charging is partially addressed in US2002/159023, which coupled a photo chromic spectacles to a case having means for recharging included therein.

Incorporating a hands free kit in a pair of spectacles, and in particular sunglasses which are intended to be included within the meaning of the term spectacles, effectively creates a dual purpose fashion accessory that is both attractive and functional. Since spectacles are supported by the ears, they enable easy and comfortable positioning of a suitably placed speaker or earpiece.

The present invention seeks to improve further on the charging technology to combine convenient charging with mobile communication technology within spectacles.

### Summary of the invention

The present invention provides a pair of spectacles formed integrally with at least an earpiece, a microphone, a rechargeable power source and a radio communication circuit, in combination with a case for receiving the spectacles, characterised in that the case includes a charging circuit coupled to the spectacles by an inductive loop for recharging the power source of the spectacles.

The radio communication circuit of the spectacles is intended to allow the spectacles to communicate with a remote unit which may not necessarily be a mobile telephone, though that is believed to be the primary application for the spectacles of the present invention. The remote unit may alternatively be a PDA, a portable or desktop computer, all of which are currently available with Bluetooth^{®} technology.

As a further possibility, the communication circuit of the spectacles may itself function as a mobile telephone handset. However, to reduce the radiation hazard referred to above, it is preferred for it to act only as a hands free kit that communicates with a remote unit which itself acts as a telephone handset.

The remote unit with which the circuitry mounted in the spectacles communicates is preferably mounted within the case, thereby allowing the case to act as both mobile telephone and charger for the hands free kit.

The term mobile telephone is used herein to refer either to a cellular phone or to a wireless telephone extension that communicates with a base unit connected to a land line.

It is preferred for the lenses of the spectacles to be photo-chromic. Because photo-chromic lenses darken automatically when exposed to bright light, they enable the spectacles to be used under all lighting conditions.

Mobile phones often have screens for displaying relevant information. In an embodiment of the invention, a display screen, for example and LCD screen, is incorporated into a lens of the spectacles.

The internal power source of the spectacles is a rechargeable battery which is recharged by means of the inductive loop, simply by inserting the spectacles into the case.

It is possible to incorporate control buttons into the frame of the spectacles and these are preferably mounted on the inner side of the frame arms.

### Brief description of the drawings

The present invention will now be described further by way of example with reference to the accompanying drawings in which:
Figure 1 is a perspective view of a pair of spectacles,
Figure 2 is a similar perspective view of an alternative design of spectacles of, and
Figure 3 shows a case for the spectacles of Figure 1.

### Detailed description of the preferred embodiment

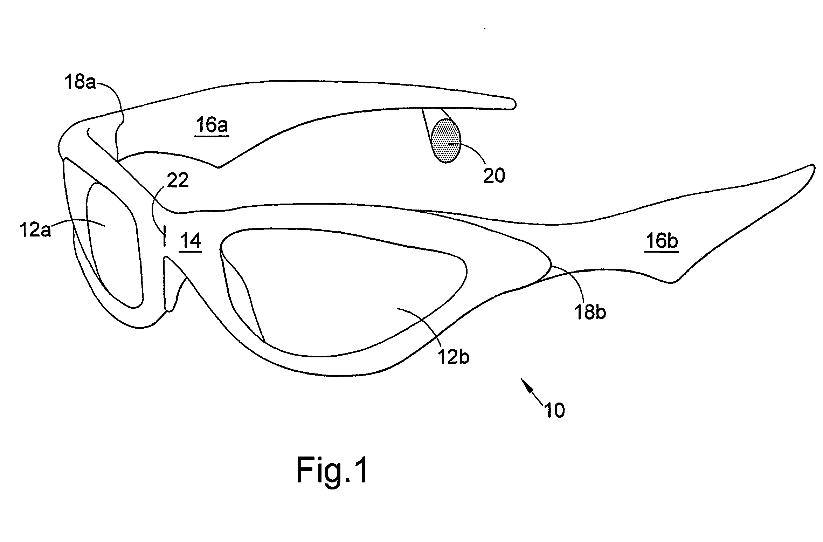

The spectacles 10 shown in Figure 1, which in this example are sunglasses, are outwardly conventional in appearance. They comprise two lenses, 12a and 12b intended to be positioned in front of the eyes of a user. The lenses are supported by a frame 14 shaped in the usual manner to support the weight of the spectacles on the bridge of the nose. The frame, as is conventional, may be made of metal or a plastics material and its style may vary widely depending on the preference of the user, the spectacles illustrated being aimed at the sports market.

The frame 14 has two arms 16a and 16b folding about hinges 18a and 18b, respectively. The hinges allow the spectacles to be folded for easier storage when not in use. The arms 16a and 16b extend rearwards from the frame and rest above the ears of a user, to locate the lenses 12a and 12b in relation to the eyes.

A microphone 22 is incorporated into the bridge piece of the frame 14. Furthermore, an earpiece 20 intended for insertion into, or to lie next to, the ear of the user depends from either or both arms 16a and or 16b, as required by the user. The ear piece maybe be foldable or retractable so that it may be moved clear of the ear so as to minimise intrusion or any discomfort when the spectacles are not functioning as a hands free kit.

In order to function as a hands free kit, spectacles 10 require a signal and power. For this purpose, the frame 10 acts also serves to house a battery and a radio link (not visible in the drawing).

The radio link communicates with a mobile phone or a remote unit such as a PDA or a computer. This may be achieved via any of the several existing wireless protocols such as Bluetooth^{®} or 802.11b.

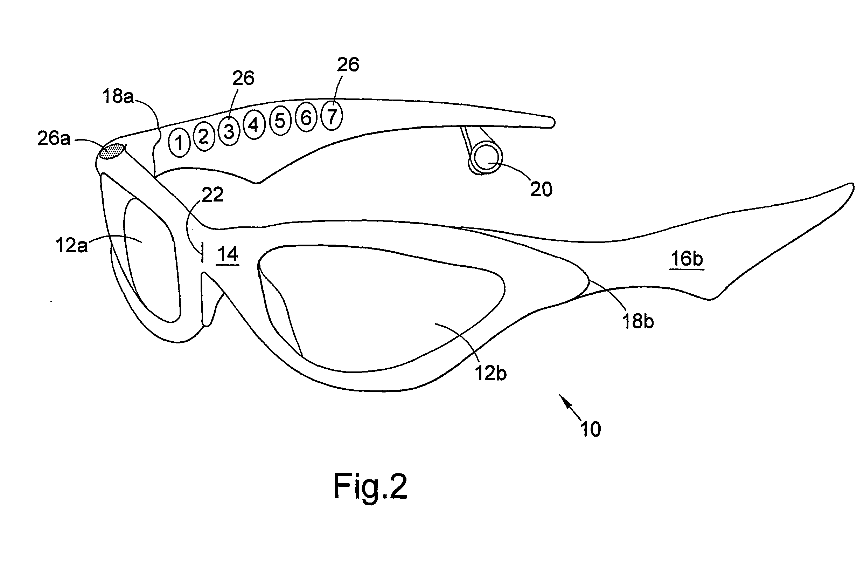

Answering and making of calls with such arrangement can be achieved by means of voice activation which is commonly known in the art with reference to existing hands free kits.
A further embodiment of the spectacles, shown in Figure 2, incorporates an entire cellular phone into the frame 14 of the spectacles 10. Modern mobile phones have removed unsightly aerials and produced smaller technology which enables the microprocessor of the unit to be hidden within the frame, retaining the design of the spectacles. Similarly to the simpler hands free spectacles described in reference to Figure 1, known voice recognition technology may be employed in order to control the basic features of the phone.

Alternatively, in order to operate the phone, the embodiment of Figure 2 provides buttons 26, arranged on the inside of arms 16a and 16b. For further convenience, a primary function key 26a may be provided on the outside rim of the frames of the spectacles. Such a button can be easily reached whilst the spectacles are being used and may be programmed to provide the most important features of the phone simply by pressing one button.

Conventional mobile phones have an LCD display screen for indicating dialled numbers and other information such as battery and signal strength, such information may be displayed on a similar panel (not shown) located on the frame 14, or alternatively by incorporated an screen, such as an LCD screen, into lens 12a or 12b. A simpler version may employ coloured LED's arranged on the frame of the spectacles just within the field of view of the user. These provide a lower cost method of indicating a lack of signal or low battery.

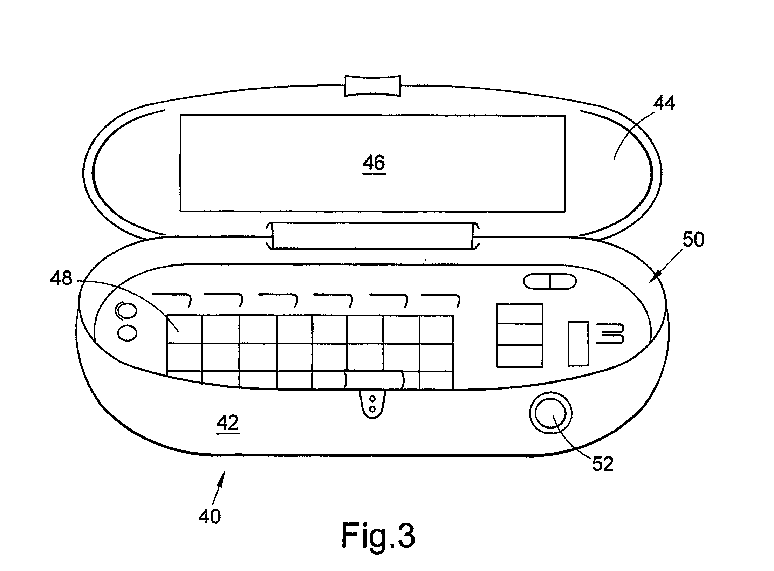

The spectacles have a rechargeable battery mounted in the frame 14. In the present invention, the charging station used to recharge the battery is built into the carrying case for the spectacles. While it would be possible when using a case such as that shown in Figure 3, a wire could be used to establish a connection between the spectacles and the charging circuit in the case, it is preferred to use an inductive loop 50 to charge the battery in the spectacles without the need for cumbersome connecting wires. The case 40 derives its own power by a jack plug connection 52 with a mains power source.

The carrying case or hard case 40, as shown in Figure 3, has a container section 42 and hinged a lid 44. In addition to serving as a means for recharging the internal battery of the spectacles, it may act in the case of the embodiment of Figure 1 as the remote unit. Hence, the carrying case may comprise a mobile telephone. For such features and others described in more detail below, the case 40 would require its own internal rechargeable power supply.

Where the spectacles 10 incorporate a cellular phone, the hard case 40 may act as more than simply a charger. Modern cellular phones have many functions such as settings for ringing tones and volumes, calendars, diaries, calculators, and web access via WAP, GPRS, 3G and other protocols. With such control over functionality, simple voice control is not sufficient to enable access to all the features.

The hard case 40 may provide access to these functions by interacting with the spectacles 10, either by wire or more preferably, wireless communication. The case doubles as the carrier of many of the functions of the phone and therefore is provided with means for data entry and retrieval. Such means may include a keyboard 48 and a display screen (or touch screen) 46, arranged conveniently around the inside of the container section 42 and lid 46.

The hard case 40 can provide features not normally associated with a cellular phone. These include a GPS antenna and receiver, which combined with a database and software, can allow the user to find his way whilst driving, or alternatively as a pedestrian trying to navigate on foot around an unfamiliar city. This can be achieved by looking directly at the display in the case, or by viewing and listening to whatever instructions are transmitted to the spectacles 10.

Further features may of course be employed such as internet access via the case 40 as well as the features of any PDA (personal digital assistant) computer, with the added benefit that any or all the information can be conveniently uploaded, or displayed via wireless communication with the spectacles 10.

With such hardware already in place, the hard case is capable of providing many more features, such as acting as a games console, or with provision of an aerial, and a suitable tuner, a radio or television. Equally with sufficient memory, either internal or in the form of memory sticks, the hard case may be easily configured to function as a portable MP3 player, or any other format of music or video. Again, use of the spectacles conveniently enables these features to be employed silently through the ear piece, therein avoiding offending surrounding people, yet conveniently without the use of wires.

Similarly, the case may also be capable of playing footage taken by camcorder or acting as a portable display screen to view still pictures taken from a remote digital camera. Alternatively the case itself can serve as a self contained camera, already having suitable display and control means.

With the potential for this number of features, the case is a likely target for theft. It would therefore be prudent to include security features. These could consist of the use of personal identification numbers, or potentially finger print or retinal scanners.

## Claims

1. A pair of spectacles (10) formed integrally with at least an earpiece (20), a microphone (22), a rechargeable power source and a radio communication circuit, in combination with a case (40) for receiving the spectacles (10), **characterised in that** the case (40) includes a charging circuit coupled to the spectacles by an inductive loop (50) for recharging the power source of the spectacles.

2. A pair of spectacles in combination with a case for receiving the spectacles, as claimed in claim 1, wherein the radio communication circuit of the spectacles (10) serves to establish a wireless connection between the earpiece (20) and microphone (22) and a nearby remote unit.

3. A pair of spectacles in combination with a case for receiving the spectacles, as claimed in claim 1 or 2, wherein the radio communication circuit of the spectacles (10) serves to enable the spectacles to perform as a self-contained mobile or cellular telephone.

4. A pair of spectacles in combination with a case for receiving the spectacles, as claimed in any of claims 1 to 3, wherein the means for recharging the spectacles is supplemented by a solar panel mounted on the case (40).

5. A pair of spectacles in combination with a case for receiving the spectacles, as claimed in any of claims 1 to 4, wherein the spectacles are provided with control buttons (26, 26a) for operating the radio communication circuit.

6. A pair of spectacles in combination with a case for receiving the spectacles, as claimed in any of claims 1 to 5, wherein the earpiece (20) depends from an arm (16a, 16b) of the spectacles (10).

7. A pair of spectacles in combination with a case for receiving the spectacles, as claimed in any of claims 1 to 6, wherein the spectacles further comprise a display screen connected to the radio communication circuit.

8. A pair of spectacles in combination with a case for receiving the spectacles, as claimed in claim 7, wherein the display screen is incorporated into a lens (12a, 12b) of the spectacles in the form of an LCD.

## Patentansprüche

1. Brille (10), einstückig geformt mit mindestens einer Hörmuschel (20), einem Mikrofon (22), einer aufladbaren Energiequelle und einer Funkkommunikationsschaltung, kombiniert mit einem Etui (40) zum Aufnehmen der Brille (10), **dadurch gekennzeichnet, dass** das Etui (40) eine Ladeschaltung umfasst, die mit der Brille über eine Induktivschleife (50) zum Aufladen der Energiequelle der Brille gekoppelt ist.

2. Brille, kombiniert mit einem Etui zum Aufnehmen der Brille, nach Anspruch 1, wobei die Funkkommunikationsschaltung der Brille (10) dazu dient, eine drahtlose Verbindung zwischen der Hörmuschel (20) und dem Mikrofon (22) und einer nahegelegenen Ferneinheit herzustellen.

3. Brille, kombiniert mit einem Etui zum Aufnehmen der Brille, nach Anspruch 1 oder 2, wobei die Funkkommunikationsschaltung der Brille (10) dazu dient, es der Brille zu ermöglichen, als unabhängiges Mobiltelefon bzw. Handy zu funktionieren.

4. Brille, kombiniert mit einem Etui zum Aufnehmen der Brille, nach einem der Ansprüche 1 bis 3, wobei das Mittel zum Aufladen der Brille durch ein Solarmodul, das auf dem Etui (40) angebracht ist, unterstützt wird.

5. Brille, kombiniert mit einem Etui zum Aufnehmen der Brille, nach einem der Ansprüche 1 bis 4, wobei die Brille mit Betätigungsknöpfen (26, 26a) zum Bedienen der Funkkommunikationsschaltung versehen ist.

6. Brille, kombiniert mit einem Etui zum Aufnehmen der Brille, nach einem der Ansprüche 1 bis 5, wobei die Hörmuschel (20) an einem Bügel (16a, 16b) der Brille (10) hängt.

7. Brille, kombiniert mit einem Etui zum Aufnehmen der Brille, nach einem der Ansprüche 1 bis 6, wobei die Brille ferner einen Bildschirm umfasst, der an die Funkkommunikationsschaltung angeschlossen ist.

8. Brille, kombiniert mit einem Etui zum Aufnehmen der Brille, nach Anspruch 7, wobei der Bildschirm in einem Glas (12a, 12b) der Brille in Form eines LCD integriert ist.

## Revendications

1. Paire de lunettes (10) formée intégralement avec au moins une oreillette (20), un microphone (22), une source d'alimentation en énergie rechargeable et un circuit de communication radio, en combinaison avec un boîtier (40) pour recevoir les lunettes (10), **caractérisé en ce que** le boîtier (40) comprend un circuit de charge relié aux lunettes par une boucle inductive (50) pour le rechargement de la source d'alimentation en énergie des lunettes.

2. Paire de lunettes en combinaison avec un boîtier permettant de recevoir les lunettes, selon la revendication 1, dans laquelle le circuit de communication radio des lunettes (10) sert à établir une connexion sans fil entre l'oreillette (20) et le microphone (22) ainsi qu'une unité à distance proche.

3. Paire de lunettes en combinaison avec un boîtier pour recevoir les lunettes, selon l'une des revendications 1 ou 2, dans laquelle le circuit de communication radio des lunettes (10) sert à permettre aux lunettes de fonctionner comme un mobile autonome ou téléphone cellulaire.

4. Paire de lunettes en combinaison avec un boîtier pour recevoir les lunettes, selon l'une quelconque des revendications 1 à 3, dans laquelle le moyen de rechargement des lunettes est complété par un panneau solaire monté sur le boîtier (40).

5. Paire de lunettes en combinaison avec un boîtier pour recevoir les lunettes, selon l'une quelconque des revendications 1 à 4, dans laquelle les lunettes sont pourvues de boutons de contrôle (26, 26a) pour la commande du circuit de communication radio.

6. Paire de lunettes en combinaison avec un boîtier pour recevoir les lunettes, selon l'une quelconque des revendications 1 à 5, dans laquelle l'oreillette (20) dépend d'une branche (16a, 16b) des lunettes (10).

7. Paire de lunettes en combinaison avec un boîtier pour recevoir les lunettes, selon l'une quelconque des revendications 1 à 6, dans laquelle les lunettes comprennent en outre un écran d'affichage relié au circuit de communication radio.

8. Paire de lunettes en combinaison avec un boîtier pour recevoir les lunettes, selon la revendication 7, dans laquelle l'écran d'affichage est incorporé dans une lentille (12a, 12b) des lunettes, sous la forme d'un écran à cristaux liquides (LCD).
